# EUROPÄISCHE PATENTANMELDUNG

(11) **EP 2 120 045 A1**
(43) Veröffentlichungstag der Anmeldung: **18.11.2009**
(21) Anmeldenummer: 09160542.8
(22) Anmeldetag: 18.05.2009
(51) Int. Cl.: G01N 29/26, G01N 29/06, G01N 29/44, G01S 15/89, G10K 11/34

(54) **Vorrichtung und Verfahren zur Erzeugung eines Ultraschallbildes mittels eines Gruppenstrahlers**

(30) Priorität: 16.05.2008 DE 102008023862
(71) Anmelder: BAM Bundesanstalt für Materialforschung und- Prüfung, 12205 Berlin (DE)
(72) Erfinder: Boehm, Rainer, 13409 Berlin (DE)
(74) Vertreter: Zimmermann & Partner

(57) **Zusammenfassung**

Ein Verfahren zur Erzeugung eines Ultraschallbildes eines Probenbereichs, umfassend das Bereitstellen von mindestens zwei Ultraschall-Meßreihen, wobei die Meßreihen jeweils mittels eines Gruppenstrahlerprüfkopfs aufgenommen wurden und jeweils einem bestimmten Meßort auf einer Probe zugeordnet sind, wobei die jeweilige Meßreihe Meßdaten bezüglich mindestens zwei verschiedener Einschallwinkel umfaßt, das Bereitstellen einer Echohöhencharakteristik des Gruppenstrahlerprüfkopfs für einen jeweiligen Einschallwinkel, die Korrektur der gemessenen Echohöhen für jeden Einschallwinkel anhand der für diesen Einschallwinkel bereitgestellten Echohöhencharakteristik, und das Ermitteln der Amplitude für einen jeweiligen Bildpunkt des Ultraschallbildes mittels des SAFT-Algorithmus unter Verwendung der korrigierten Echohöhen, wobei jeweils nur korrigierte Echohöhen für solche Einschallwinkel berücksichtigt werden, für die der Bildpunkt innerhalb eines für diesen Einschallwinkel vorbestimmten Auswertewinkelbereichs liegt, wird bereitgestellt.

## Beschreibung

Die vorliegende Erfindung betrifft eine Vorrichtung und ein Verfahren zur Erzeugung eines Ultraschallbildes, insbesondere eine Vorrichtung und ein Verfahren zur zerstörungsfreien Werkstoffprüfung.

Die Synthetic Aperture Focusing Technique (SAFT) ist ein bekanntes Verfahren zur Erhöhung der räumlichen Auflösung, um möglichst genaue Aussagen über den Ort und die Form von Reflektoren in Proben zu gewinnen. Für den grundlegenden SAFT-Algorithmus sind Prüfköpfe ideal, die den Schall punktförmig und richtungsunabhängig senden und empfangen können. Daher werden üblicherweise Ultraschallsonden verwendet, die etwa Abmessungen von der Größe der Wellenlänge haben.

Diese kleinen Sonden sind jedoch für die klassische Ultraschallprüfung, bei der einzelne A-Bilder ausgewertet werden, ungeeignet, da die Echoamplitude und das Signal/RauschVerhältnis naturgemäß zu klein sind. Außerdem erhält man kaum eine Richtungsinformation über das Echo.

Die Verwendung von üblichen Prüfköpfen mit festem Einschallwinkel erlaubt nur eine geringe Auflösungsverbesserung durch die SAFT-Methode aufgrund der aperturbeschränkenden geringen Ortsfrequenzbandbreite des Prüfkopfes.

Mit Gruppenstrahlerprüfköpfen (GRST) kann die Apertur durch das Ändern des Einschallwinkels innerhalb seines Schwenkbereichs vergrößert werden. Die Anwendung des für kleine Prüfköpfe gedachten SAFT-Algorithmus führt bei Gruppenstrahlerprüfköpfen jedoch nicht zum gewünschten Erfolg. Insbesondere wird die erwartete Auflösung nicht erreicht, und es entstehen leicht Artefakte durch die falsche Zuordnung von Ortsfrequenzen.

Im Stand der Technik ist bekannt, Einzelschwingerelemente von Gruppenstrahlerprüfköpfen zur Meßwertaufnahme für eine SAFT-Analyse zu verwenden. Diese Technik entspricht im Wesentlichen der Verwendung von kleinen Einzelsonden, und die Meßergebnisse können nicht konventionell ausgewertet werden.

Aus praktischen Gründen ist es jedoch wünschenswert, mit etablierten Ultraschallprüfsystemen, d.h. bekannten Prüfköpfen und bekannter Gerätetechnik, sowie gängigen Auswerteverfahren arbeiten zu können. Insbesondere soll eine Übereinstimmung mit den jeweiligen Prüfvorschriften gewährleistet sein und optional eine SAFT-Auswertung als ortsauflösendes Verfahren ermöglicht werden.

Aus der US 5,549,002 ist ein SAFT-Verfahren bekannt, bei dem ein einzelner kleiner Prüfkopf über eine Probenoberfläche gefahren wird, und wobei jeweils nur Signale aus einem bestimmten Winkelbereich aufgenommen werden.

Im Hinblick auf das oben Gesagte ist es daher eine Aufgabe der vorliegenden Erfindung, ein Verfahren zur Anwendung des SAFT-Algorithmus bei Gruppenstrahlerprüfköpfen bereitzustellen.

Diese Aufgabe wird gelöst durch ein Verfahren gemäß Anspruch 1 sowie eine Vorrichtung gemäß Anspruch 18. Weitere Aspekte, Einzelheiten, Vorteile und Merkmale der vorliegenden Erfindung ergeben sich aus den Unteransprüchen, der Beschreibung sowie den beigefügten Zeichnungen.

Gemäß einem Ausführungsbeispiel wird ein Verfahren zur Erzeugung eines Ultraschallbildes eines Probenbereichs bereitgestellt. Das Verfahren umfaßt das Bereitstellen von mindestens zwei Ultraschall-Meßreihen, wobei die Meßreihen jeweils mittels eines Gruppenstrahlerprüfkopfs aufgenommen wurden. Weiterhin sind die Meßreihen jeweils einem bestimmten Meßort auf einer Probe zugeordnet, wobei die jeweilige Meßreihe Meßdaten bezüglich mindestens zwei verschiedener Einschallwinkel umfaßt. Weiterhin umfaßt das Verfahren das Bereitstellen einer Echohöhencharakteristik des Gruppenstrahlerprüfkopfs für einen jeweiligen Einschallwinkel. Darüber hinaus beinhaltet das Verfahren die Korrektur der gemessenen Echohöhen für jeden Einschallwinkel anhand der für diesen Einschallwinkel bereitgestellten Echohöhencharakteristik, und schließlich das Ermitteln der Amplitude für einen jeweiligen Bildpunkt des Ultraschallbildes mittels des SAFT-Algorithmus unter Verwendung der korrigierten Echohöhen, wobei jeweils nur korrigierte Echohöhen für solche Einschallwinkel berücksichtigt werden, für die der Bildpunkt innerhalb eines für diesen Einschallwinkel vorbestimmten Auswertewinkelbereichs liegt.

Mittels des oben dargestellten Verfahrens kann der SAFT-Algorithmus auch für Gruppenstrahlerprüfköpfe nutzbar gemacht werden. Insbesondere kann mit bekannten Ultraschallprüfsystemem, d.h. Prüfköpfen und Gerätetechnik, sowie bekannten Auswerteverfahren gearbeitet werden. Auf diese Weise kann Vorschriftenkonformität gewährleistet werden. Zusätzlich wird jedoch eine SAFT-Auswertung als ortsauflösende Analysetechnik bereitgestellt, so daß kein zusätzlicher Zeit- und Geräteaufwand erforderlich ist. Beispielsweise kann so bei Prüfungen in Kernkraftwerken die Strahlenbelastung des Prüfpersonals vermindert werden.

Gemäß einer Weiterbildung kann eine Abhängigkeit der Echohöhe vom Einschallwinkel kompensiert werden, die im wesentlichen der Richtcharakteristik eines einzelnen Schwingerelements des Gruppenstrahlerprüfkopfs entspricht. Gemäß einer anderen Weiterbildung kann eine Entfernungsabhängigkeit der Echohöhe kompensiert wird.

Gemäß einem Ausführungsbeispiel kann der Auswertewinkelbereich für alle Einschallwinkel als fester Winkelbereich vorbestimmt sein. Insbesondere kann der Auswertewinkelbereich ±1° bis ±10° betragen.

Gemäß einem anderen Ausführungsbeispiel kann der Auswertewinkelbereich für einen jeweiligen Einschallwinkel durch die Schallbündeldivergenz für diesen Einschallwinkel gegeben sein. Insbesondere kann dabei die Schallbündeldivergenz durch einen vorbestimmten Echohöhenabfall bestimmt sein. Typischerweise beträgt der vorbestimmte Echohöhenabfall höchstens -6 dB, bevorzugt -3 dB.

Gemäß einem anderen Ausführungsbeispiel kann das Schallfeld mittels eines vorbestimmten Zeitbelegungsprofils des Gruppenstrahlerprüfkopfs fokussiert werden. Dabei kann anhand des vorbestimmten Zeitbelegungsprofils eine Laufzeitkorrekturgröße für einen jeweiligen Einschallwinkel ermittelt werden und die aufgrund der Fokussierung und/oder des Einschallwinkels auftretenden Verzögerungszeiten anhand der Laufzeitkorrekturgröße kompensiert werden. Gemäß einer Weiterbildung entspricht die Laufzeitkorrekturgröße der zeitlichen Verzögerung des mittleren Schwingerelements des Gruppenstrahlerprüfkopfs gemäß der Zeitbelegung.

Gemäß noch einem anderen Ausführungsbeispiel kann ein nichtlinearer Zusammenhang zwischen der Laufzeit des Impulsschwerpunkts und der sich daraus ergebenden Entfernung einer Echoquelle für jeden Einschallwinkel ermittelt werden und der nichtlineare Zusammenhang mittels einer Entzerrungsfunktion kompensiert werden. Insbesondere kann die Entzerrungsfunktion über eine numerische Modellierung des Schallfeldes und der Echolaufzeit bestimmt werden.

Sämtliche zur Korrektur bzw. Kompensation erforderlichen Größen können jeweils als Näherungsfunktion oder alternativ oder zusätzlich als Tabelle hinterlegt sein. Dabei können die zur Korrektur bzw. Kompensation erforderlichen Größen aus einer Berechnung und/oder einer Vermessung des Schallfeldes des Gruppenstrahlerprüfkopfs gewonnen werden.

Gemäß einem weiteren Aspekt der vorliegenden Erfindung umfaßt eine Vorrichtung zur Durchführung eines der oben beschriebenen Verfahren einen Gruppenstrahlerprüfkopf, und eine Auswerteeinheit, die eingerichtet ist, eines der oben beschriebenen Verfahren auszuführen. Typischerweise weist die Vorrichtung weiterhin eine Steuereinheit zur zeitlichen Ansteuerung der einzelnen Schwingerelemente des Gruppenstrahlerprüfkopfs auf. Gemäß einer Weiterbildung sind die Auswerteeinheit und/oder die Steuereinheit tragbar. Gemäß einer anderen Weiterbildung sind der Gruppenstrahlerprüfkopf und/oder die Steuereinheit und/oder die Auswerteeinheit über eine kabellose Datenverbindung miteinander verbunden.

Anhand der beigefügten Zeichnungen werden nun Ausführungsbeispiele der vorliegenden Erfindung erläutert. Dabei zeigt:
- Fig. 1: eine SAFT-Rekonstruktion eines Punkterasters in 45 mm Tiefe für einen Gruppenstrahlerprüfkopf mit einer ersten Parameterwahl;
- Fig. 2: eine SAFT-Rekonstruktion eines Punkterasters in 45 mm Tiefe für einen Gruppenstrahlerprüfkopf mit einer zweiten Parameterwahl;
- Fig. 3: eine SAFT-Rekonstruktion eines Punkterasters in 45 mm Tiefe für einen Gruppenstrahlerprüfkopf mit einer dritten Parameterwahl;
- Fig. 4: eine SAFT-Rekonstruktion eines Punkterasters in 45 mm Tiefe für einen Gruppenstrahlerprüfkopf mit einer vierten Parameterwahl;
- Fig. 5: eine schematische Ansicht einer Vorrichtung und des Verfahrens gemäß einem Ausführungsbeispiels der vorliegenden Erfindung;
- Fig. 6: eine SAFT-Rekonstruktion eines Punkterasters in 45 mm Tiefe für einen kleinen Prüfkopf gemäß dem Stand der Technik;
- Fig. 7: eine SAFT-Rekonstruktion eines Punkterasters in 45 mm Tiefe für einen Gruppenstrahlerprüfkopf gemäß einem Ausführungsbeispiel der vorliegenden Erfindung;
- Fig. 8: eine SAFT-Rekonstruktion eines Punkterasters in 45 mm Tiefe ohne Entfernungskorrektur der Echohöhen;
- Fig. 9: eine SAFT-Rekonstruktion des Punkterasters in 45 mm Tiefe gemäß Fig. 8 mit Entfernungskorrektur der Echohöhen;
- Fig. 10: eine SAFT-Rekonstruktion dreier Rechteckflächen unterschiedlicher Neigung in 40 bzw. 55 mm Tiefe ohne Kompensation der Einschallwinkelabhängigkeit der Echohöhen;
- Fig. 11: eine SAFT-Rekonstruktion der drei Rechteckflächen unterschiedlicher Neigung in 40 bzw. 55 mm Tiefe mit Kompensation der Einschallwinkelabhängigkeit der Echohöhen;
- Fig. 12: eine SAFT-Rekonstruktion der drei Rechteckflächen unterschiedlicher Neigung in 40 bzw. 55 mm Tiefe mit Kompensation sowohl der Einschallwinkelabhängigkeit als auch der Entfernungsabhängigkeit der Echohöhen;
- Fig. 13: eine SAFT-Rekonstruktion eines Punkterasters in 30 mm Tiefe ohne Kompensation der nichtlinearen Abbildung des Abstands;
- Fig. 14: eine SAFT-Rekonstruktion desselben Punkterasters in 30 mm Tiefe mit Kompensation der nichtlinearen Abbildung des Abstands;
- Fig. 15: eine SAFT-Rekonstruktion eines Punktreflektors in 60 mm Tiefe ohne Kompensation der Verschiebung des Schallaustrittspunktes; und
- Fig. 16: eine SAFT-Rekonstruktion eines Punktreflektors in 60 mm Tiefe mit Kompensation der Verschiebung des Schallaustrittspunktes.

Die im folgenden beschriebenen Verfahren beruhen bzw. verwenden die sogenannte Synthetic Aperture Focusing Technique (SAFT). Das SAFT-Verfahren ist ein im Stand der Technik bekanntes Verfahren zur Erhöhung der räumlichen Auflösung, um möglichst genaue Aussagen über den Ort und die Form von Reflektoren (Ungänzen) in Proben zu gewinnen. Beim SAFT-Verfahren werden in jedem Bildpunkt im Fehlererwartungsbereich mittels Rückwärtsrechnung alle in Frage kommenden HF-Signale der Echos mit einer Zeitverschiebung (Phasenlage) addiert, die die Echos hätten, wenn dieser Bildpunkt die Quelle einer reflektierten Welle, d.h. ein Reflektor, wäre. Die jeweilige Zeitverschiebung ergibt sich aus der Geometrie, d.h. aus dem Abstand zwischen Prüfkopf und Bildpunkt. Ist der Bildpunkt tatsächlich die Quelle einer reflektierten Welle, d.h. liegt der Bildpunkt in einem Reflektor, dann wächst die Amplitude des Bildpunkts mit der Zahl der Prüfkopfpositionen, aus denen der Fehler gesehen wird. Für alle anderen Bildpunkte variiert die jeweilige Phasenlage, so daß die Gesamtsumme gegen Null strebt.

Eine gute Rekonstruktion der Echoquellen (Reflektoren) erfordert die genaue Berechnung der Laufzeit vom Sender zum möglichen Reflexionsort und von dort zum Empfänger. Für punktförmige Sender und Empfänger auf der Oberfläche kann die Laufzeit aus den Abständen und der Schallgeschwindigkeit genau genug bestimmt werden.

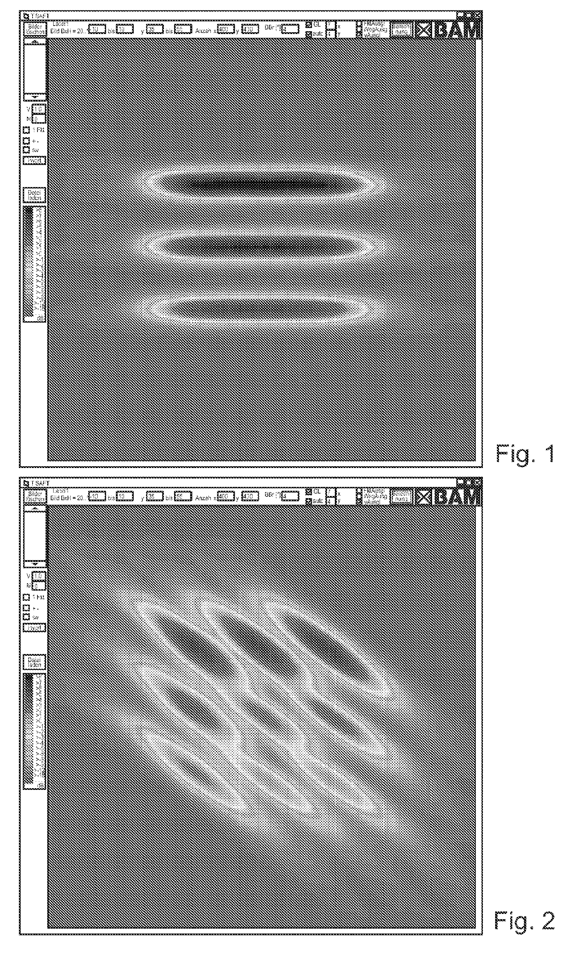

Im folgenden werden Beispiele für SAFT-Rekonstruktionen von Echodaten normal großer Prüfköpfe mit nur einem Einschallwinkel und beschränkter Apertur anhand der Fign. 1 bis 4 gezeigt. Aufgrund der vorgenannten Merkmale weisen die SAFT-Rekonstruktionen eine schlechte Ortsauflösung auf.

Fig. 1 zeigt eine SAFT-Rekonstruktion eines Punkterasters in 45 mm Tiefe für einen Gruppenstrahlerprüfkopf. Dabei ist das Punkteraster als 3×3-Raster im Quadrat mit einer Größe von 6×6 mm² ausgebildet. Der Gruppenstrahlerprüfkopf ist als linearer Gruppenstrahler mit 16 Schwingerelementen bei 4 MHz und einer Aperturgröße von 19×19 mm² ausgebildet. Das Schallbündel weist einen Öffnungswinkel von ca. 4° auf, wobei der Öffnungswinkel durch einen Echohöhenabfall von -6 dB bestimmt ist. Für die Messung wurde ein Einschallwinkel 0° verwendet. Im Ergebnis ist die horizontale Ortsauflösung so schlecht, daß die einzelnen Rasterpunkte nicht mehr aufgelöst werden sondern ineinander verschmiert erscheinen.

Die Fig. 2 zeigt eine SAFT-Rekonstruktion desselben Punkterasters, wobei ein Einschallwinkel von 40° gewählt wurde. Das Schallbündel weist wiederum einen Öffnungswinkel von ca. 4° auf, wobei der Öffnungswinkel durch einen Echohöhenabfall von -6 dB bestimmt ist. Hierbei werden zwar die neun Rasterpunke aufgelöst, jedoch tritt eine diagonale Verzerrung des Bildes auf.

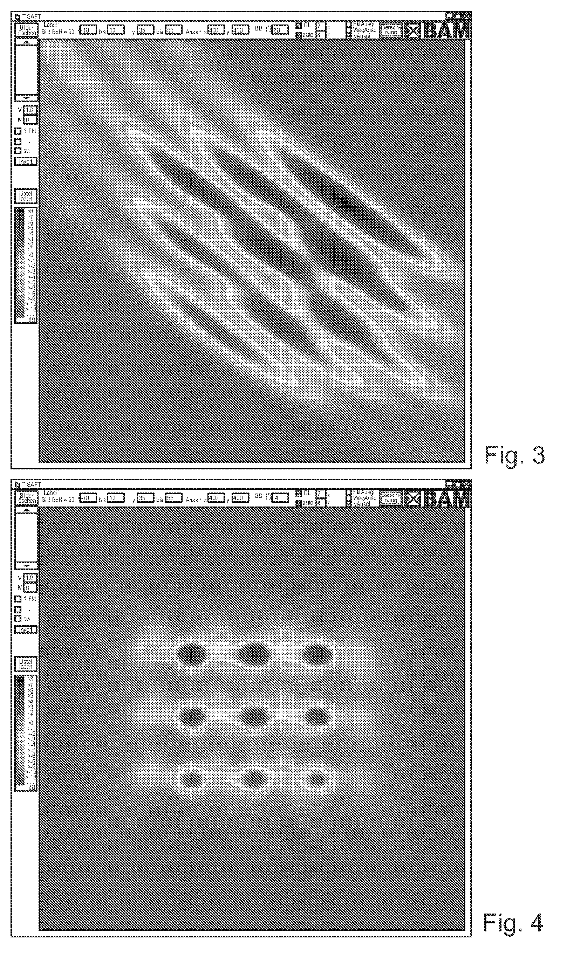

Die Fig. 3 zeigt eine SAFT-Rekonstruktion desselben Punkterasters bei einem Einschallwinkel von 40°. Jedoch wurden hierbei Daten aus einem sehr großen Auswertungswinkelbereich von ±40° ausgewertet. Das rekonstruierte Bild weist eine starke diagonale Verzerrung auf, wobei die Rasterpunkte ineinanderfließen.

Fig. 4 zeigt eine SAFT-Rekonstruktion desselben Punkterasters, wobei der Einschallwinkel zwischen -40° und +40° in Schritten von 20° durchgefahren wurde, was zu deutlichen Lücken in der Gesamtapertur führt. Die Rasterpunkte werden zwar vertikal gut aufgelöst, jedoch ist die horizontale Ortsauflösung unbefriedigend. Weiterhin zeigt das rekonstruierte SAFT-Bild Nebenbilder der einzelnen Raster, die auf tatsächlich nicht vorhandene Reflektoren hindeuten.

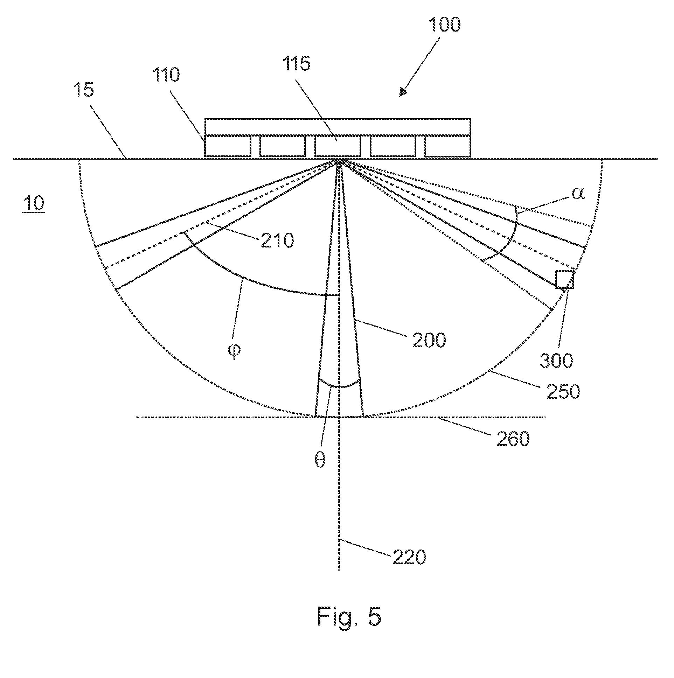

Im folgenden wird nun anhand von Fig. 5 das Grundprinzip eines Verfahrens beschrieben, das den Ausführungsbeispielen der vorliegenden Erfindung zugrunde liegt. Darin weist ein Gruppenstrahlerprüfkopf 100 mehrere Einzelschwingerelemente 110 auf. Der Aufbau eines Gruppenstrahlerprüfkopfs ist dem Fachmann als Stand der Technik geläufig und wird daher nicht weiter ausgeführt. Der Gruppenstrahlerprüfkopf 100 ist an eine Oberfläche 15 einer Probe 10 akustisch angekoppelt, so daß der von den Einzelschwingerelementen 110 erzeugte Schall in die Probe 10 eingeleitet werden kann.

Im Betrieb erzeugt der Gruppenstrahlerprüfkopf 100 ein Schallbündel 200, das eine Schallbündeldivergenz θ aufweist. Das Schallbündel 200 des Gruppenstrahlerprüfkopfs 100 wird durch Überlagerung der von den Einzelschwingerelementen 110 eingeschallten Einzelbündel gebildet. Für die Zwecke des vorliegenden Verfahrens kann das Schallbündel 200 als ein Schallbündel aufgefaßt werden, das vom mittleren Einzelschwingerelement 115 des Gruppenstrahlerprüfkopfes 100 ausgehend in die Probe eintritt (Schalleintrittspunkt). Weiterhin kann für dieses Schallbündel 200 ein Einschallwinkel ϕ eingestellt werden, wobei der Einschallwinkel ϕ durch den Winkel zwischen der Mittelachse 210 des jeweiligen Schallbündels und der senkrecht auf dem Schalleintrittspunkt an der Probenoberfläche 15 stehenden Achse 220 gegeben ist. Herkömmlicherweise wurden unterschiedliche Einschallwinkel mittels Unterlegkeilen eingestellt. Bei Gruppenstrahlerprüfköpfen lassen sich verschiedene Einschallwinkel jedoch über eine bestimmte zeitliche Ansteuerung der Einzelschwingerelemente 110 realisieren. Die Bestimmung und Einstellung eines solchen Zeitbelegungsprofils für die Einzelschwingerelemente 110 ist dem Fachmann aus dem Stand der Technik bekannt und wird hier nicht weiter ausgeführt.

Bei einem Verfahren gemäß einem Ausführungsbeispiel der vorliegenden Erfindung werden nun Ultraschall-Meßreihen mit dem Gruppenstrahlerprüfkopf aufgenommen. Dabei wird der Gruppenstrahlerprüfkopf auf verschiedene Orte auf der Probenoberfläche 15 aufgesetzt, so daß eine jeweilige Meßreihe einem bestimmten Meßort auf einer Probe 10 zugeordnet ist. Anschließend werden an jedem der Meßorte auf der Probe bezüglich verschiedener Einschallwinkel ϕ aufgenommen. Beispielsweise kann an jedem Meßort ein Winkelbereich von -40° bis +40° in 21 Schritten von jeweils 4° durchgefahren werden. Die jeweilige Meßreihe umfaßt dann 21 A-Bilder, nämlich je eines für einen jeweiligen Einschallwinkel ϕ. Der Grund hierfür ist, daß der Gruppenstrahlerprüfkopf ein Schallbündel erzeugt, dessen Winkelöffnung vom Verhältnis seiner Größe zur Wellenlänge und von der Ansteuerung bestimmt wird. Bei der Messung wird so die gesamte Apertur durch schrittweise Änderung des Einschallwinkels erzeugt. Typischerweise ist die Schrittweite ist hinreichen klein, wenn sich die Einzelschallbündel bis zur -3 dB oder -6 dB Grenze, d.h. einem Echohöhenabfall um -3 dB oder -6 dB, überlappen. Die vorhergehend beschriebene Aufnahme der Meßreihe wird an jedem vorgesehenen Meßort auf der Probenoberfläche wiederholt.

Weiterhin wird bei dem Verfahren eine Echohöhencharakteristik des Gruppenstrahlerprüfkopfs für einen jeweiligen Einschallwinkel bereitgestellt. Die vom Gruppenstrahler aufgenommenen Echohöhen variieren jeweils spezifisch mit dem jeweiligen Einschallwinkel, so daß derselbe Reflektor für verschiedene Einschallwinkel unterschiedliche Echohöhen liefert.

In einem weiteren Schritt des Verfahrens werden nun die gemessenen Echohöhen für jeden Einschallwinkel anhand der für diesen Einschallwinkel bereitgestellten Echohöhencharakteristik korrigiert. In dem oben genannten Beispiel wird also jedes der 21 A-Bilder anhand der für den jeweiligen der 21 verschiedenen Einschallwinkel typischen Echohöhencharakteristik korrigiert. Gemäß einer Ausführungsform sind die zur Korrektur bzw. Kompensation erforderlichen Größen jeweils als Näherungsfunktion hinterlegt. Gemäß einer anderen Ausführungsform sind die zur Korrektur bzw. Kompensation erforderlichen Größen jeweils als Tabelle hinterlegt sind. Die zur Korrektur bzw. Kompensation erforderlichen Größen können dabei beispielsweise aus einer Berechnung des Schallfeldes des Gruppenstrahlerprüfkopfs bestimmt werden. Ebenfalls möglich ist die Ermittlung der zur Korrektur bzw. Kompensation erforderlichen Größen aus einer Vermessung des Schallfeldes des Gruppenstrahlerprüfkopfs bestimmt werden. Selbstverständlich können Berechnung/Simulation und Vermessung auch miteinander kombiniert werden.

Gemäß einem Ausführungsbeispiel wird eine Abhängigkeit der Echohöhe vom Einschallwinkel kompensiert wird, die im wesentlichen der Richtcharakteristik eines einzelnen Schwingerelements 110 des Gruppenstrahlerprüfkopfs 100 entspricht. Die Einzelschwingerelemente 110 weisen sie eine gewisse winkelabhängige Richtcharakteristik auf, die zu einer Verfälschung der Echohöhen im A-Bild führt. Mittels der Kompensation dieser Richtcharakteristik für einen jeweiligen Einschallwinkel können die A-Bilder einer Meßreihe entsprechend korrigiert werden.

Gemäß einem weiteren Ausführungsbeispiel wird eine Entfernungsabhängigkeit der Echohöhe kompensiert. Die aufgenommene Echohöhe hängt nicht nur von Art und Lage des Reflektors ab, sondern ist eben auch von der Entfernung des Reflektors vom Schalleintrittspunkt abhängig. Dabei variiert diese Entfernungsabhängigkeit der Echohöhen mit dem jeweiligen Einschallwinkel. Eine für den jeweiligen Schalleintrittswinkel vorgenommene Kompensation der Entfernungsabhängigkeit der Echohöhen in den A-Bildem vermindert somit die Gesamtwinkelabhängigkeit der A-Bilder.

Gemäß noch einem weiteren Ausführungsbeispiel wird ein nichtlinearer Zusammenhang zwischen der Laufzeit des Impulsschwerpunkts und der sich daraus ergebenden Entfernung einer Echoquelle für jeden Einschallwinkel ermittelt. Der nichtlineare Zusammenhang wird dann mittels einer Entzerrungsfunktion kompensiert. Die Entzerrungsfunktion kann beispielsweise über eine numerische Modellierung des Schallfeldes und der Echolaufzeit bestimmt werden. Bei einem ausgedehnten Schwinger ist der Zusammenhang zwischen der Laufzeit des Impulsschwerpunktes und der sich daraus ergebenen Position der Anzeige in der SAFT-Rekonstruktion und der tatsächlichen Entfernung einer Echoquelle nicht streng linear. Der Effekt wird durch eine Phasenverschiebung hervorgerufen, die sich zwischen der Phasenlage, die üblicherweise als Grundlage für die Schallwegberechnung verwendet wird, und der resultierenden Phaselage aller sich im Aufpunkt überlagernden Elementarwellen, die von der ganzen Schwingerfläche ausgehen, ergibt. Dabei ist die Phasenlage, die üblicherweise als Grundlage für die Schallwegberechnung verwendet wird durch den Abstand zwischen dem Schwingermittelpunkt und dem jeweiligen Aufpunkt gegeben. Dieser Effekt ist im Stand der Technik unbekannt und fällt bei der klassischen Ultraschallprüfung nicht ins Gewicht. Bei einer SAFT-Rekonstruktion kann die durch die Nichtlinearität verursachte Ortsabweichung jedoch bei einigen Prozent liegen. Die zur Kompensation geeignete Entzerrungsfunktion kann durch Modellierung des Schallfeldes ermittelt werden.

In einem letzten Schritt des Verfahrens wird die Amplitude für einen jeweiligen Bildpunkt 300 des Ultraschallbildes mittels des SAFT-Algorithmus ermittelt. Dabei werden die korrigierten Echohöhen, d.h. die bezüglich der Winkelabhängigkeit kompensierten A-Bilder, verwendet. Für den SAFT-Algorithmus werden jedoch jeweils nur korrigierte Echohöhen für solche Einschallwinkel berücksichtigt, für die der Bildpunkt 300 innerhalb eines für diesen Einschallwinkel vorbestimmten Auswertewinkelbereichs α liegt. Dabei kann der Auswertewinkelbereich α für alle Einschallwinkel ϕ als fester Winkelbereich vorbestimmt sein. Beispielsweise kann der Auswertewinkelbereich α ±1° bis ±10° um die jeweilige Mittelachse 210 des Schallbündels 200 betragen. Dabei fällt die Mittelachse 210 typischerweise mit der Achse maximaler Amplitude zusammen. Gemäß einer anderen Ausführungsform kann der Auswertewinkelbereich α für einen jeweiligen Einschallwinkel ϕ durch die Schallbündeldivergenz θ für diesen Einschallwinkel ϕ gegeben sein. Typischerweise ist dabei die Schallbündeldivergenz θ durch einen vorbestimmten Echohöhenabfall bestimmt. Beispielsweise kann der vorbestimmte Echohöhenabfall -6 dB, bevorzugt -3 dB, betragen. Es ist auch möglich, den Auswertewinkelbereich α fest vorzugeben, wobei der vorgegebene Winkelbereich im wesentlichen einer mittleren Schallbündeldivergenz θ entspricht. Gemäß dem oben beschrieben Verfahren erfolgt daher für jedes einzelne Schallbündel die Auswertung der Echosignale im SAFT-Algorithmus nur für den infragekommenden Winkel- bzw. Ortsfrequenzbereich.

Gemäß einer Weiterbildung der vorliegenden Erfindung wird das Schallfeld fokussiert, d.h. es erfolgt eine Einengung der Einzelschallbündel im Ortsbereich. Beispielsweise kann das Schallfeld in einer bestimmten Entfernung 250 vom Schalleintrittspunkt fokussiert werden. Gemäß einer anderen Ausführungsform kann das Schallfeld auch für alle Einschallwinkel auf eine bestimmte Tiefe 260 unter der Probenoberfläche fokussiert werden. Typischerweise wird das Schallfeld mittels eines vorbestimmten Zeitbelegungsprofils des Gruppenstrahlerprüfkopfs fokussiert. Diese Technik der Fokussierung bei Gruppenstrahlerprüfköpfen ist dem Fachmann aus dem Stand der Technik bekannt und wird daher nicht weiter ausgeführt. Weiterhin kann bei erfolgter Fokussierung anhand des vorbestimmten Zeitbelegungsprofils eine Laufzeitkorrekturgröße für einen jeweiligen Einschallwinkel ermittelt werden. Die aufgrund der Fokussierung und/oder des Einschallwinkels auftretenden Verzögerungszeiten können dann mittels der Laufzeitkorrekturgröße kompensiert werden. In einem Ausführungsbeispiel entspricht die Laufzeitkorrekturgröße genau der zeitlichen Verzögerung des mittleren Schwingerelements des Gruppenstrahlerprüfkopfs gemäß der Zeitbelegung.

Alle oben beschriebenen Verfahren können mit herkömmlichen Gruppenstrahlerprüfköpfen ausgeführt werden. Jedoch muß die zugehörige Auswerteeinheit eingerichtet sein, die Kompensations- bzw. Korrekturverfahren auf die A-Bilder anzuwenden und dann das SAFT-Verfahren mit beschränktem Auswertewinkelbereich auszuführen. Typischweise umfaßt ein solches Meßsystem weiterhin eine Steuereinheit zur zeitlichen Ansteuerung der einzelnen Schwingerelemente des Gruppenstrahlerprüfkopfs. Solche Steuereinheiten sind dem Fachmann bekannt. Gemäß einem Ausführungsbeispiel sind die Auswerteeinheit und/oder die Steuereinheit tragbar. Gemäß einer Weiterbildung der vorliegenden Erfindung sind der Gruppenstrahlerprüfkopf und/oder die Steuereinheit und/oder die Auswerteeinheit über eine kabellose Datenverbindung miteinander verbunden.

Anhand der folgenden Figuren wird die Wirkung der oben beschriebenen Korrekturmechanismen des prüfkopfeigenschaftsadaptierten SAFT-Verfahrens an simulierten Echodaten gezeigt. Bei den Simulationen wurden Mehrfachreflexionen und Abschattungen, die in der Realität auftretenden würden, vernachlässigt.

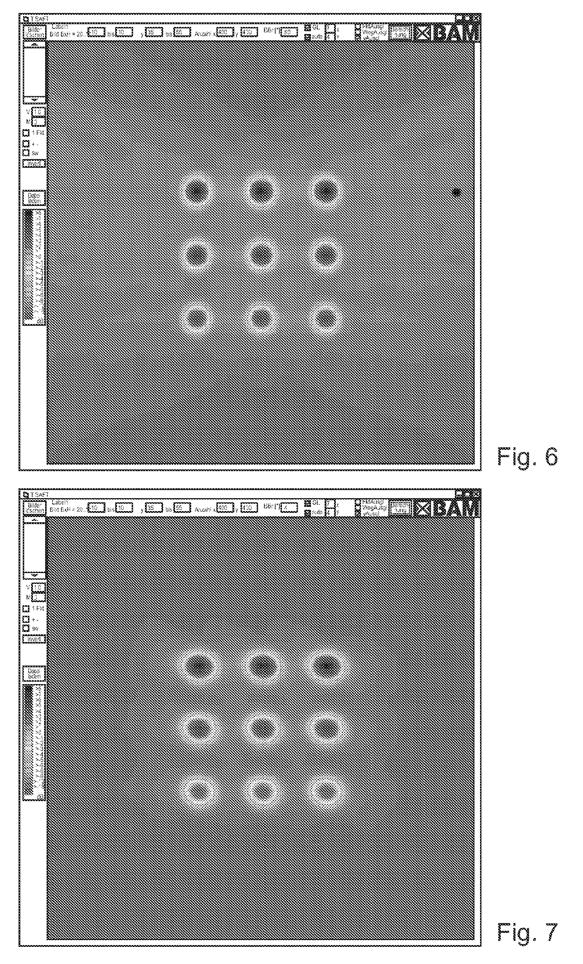

Figur 6 zeigt eine SAFT-Rekonstruktion eines Punkterasters in 45 mm Tiefe für einen kleinen Prüfkopf als Vergleichsbeispiel. Der kleine 4MHz-Prüfkopf weist lediglich eine einzige Schwingerfläche von 1×1 mm² ohne Vorlaufkeil auf, ist also nicht als Gruppenstrahlerprüfkopf ausgebildet. Aufgrund seiner Annäherung an einen punktförmigen Prüfkopf mit großer Schallbündelöffnung ist damit sehr gut geeignet für den herkömmlichen SAFT-Algorithmus. Bei dem Einzelschwingerprüfkopf des Vergleichsbeispiels wurde der Gesamtwinkelbereich von ±40° ausgewertet. Im Ergebnis wird das 3×3 Punkteraster gut abgebildet.

Die Fig. 7 zeigt eine SAFT-Rekonstruktion eines Punkterasters in 45 mm Tiefe für einen Gruppenstrahlerprüfkopf gemäß einem Ausführungsbeispiel der vorliegenden Erfindung. Der Gruppenstrahlerprüfkopf ist als linearer Gruppenstrahler mit 16 Schwingerelementen bei 4 MHz und einer Aperturgröße von 19x 19 mm² ausgebildet. Das Schallbündel weist einen Öffnungswinkel von ca. 4° auf, wobei der Öffnungswinkel durch einen Echohöhenabfall von -6 dB bestimmt ist. Für die Messung wurden 21 Schallbündel im Einschallwinkelbereich Δϕ von -40° bis +40° in Schritten von 4° jeweils für einen Auswertewinkelbereich α ±2° ausgewertet. Ein Vergleich mit der Fig. 6 zeigt, daß bei gleicher Aperturgröße beide Verfahren gleich gute Ergebnisse liefern. Mit anderen Worten können mittels des auf Gruppenstrahler angepaßten Verfahrens SAFT-Bilder erzeugt werden, die denen kleiner und somit "idealer" Prüfköpfe entsprechen.

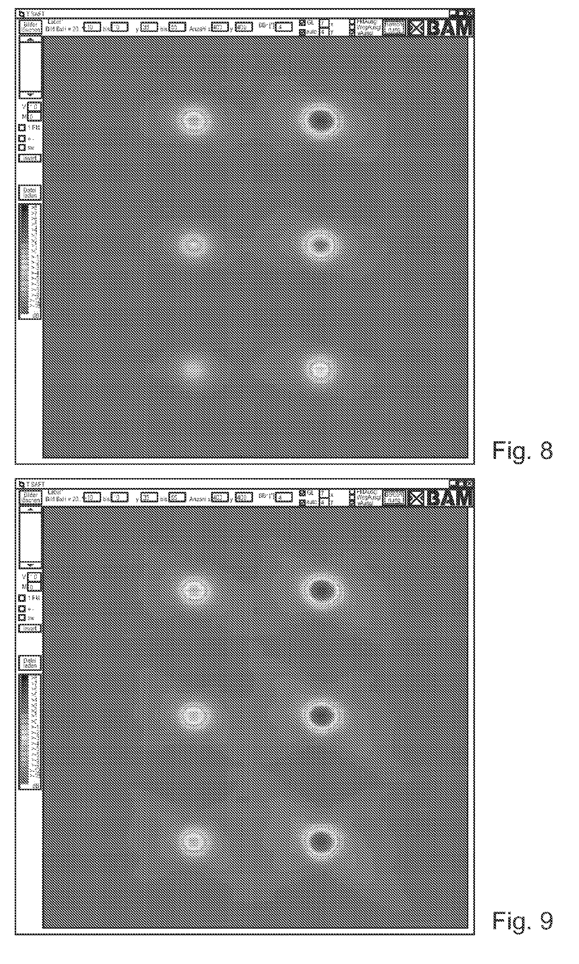

Die Fig. 8 zeigt eine SAFT-Rekonstruktion eines Punkterasters in 45 mm Tiefe ohne Entfernungskorrektur der Echohöhen und Fig. 9 zeigt zum Vergleich eine SAFT-Rekonstruktion deselben Punkterasters mit Entfernungskorrektur der Echohöhen. Dabei ist die Reflektivität der rechten Punkte doppelt so hoch gewählt wie die Reflektivität der Punkte auf der linken Seite. In Fig. 8 zeigt sich eine deutliche Variation der Reflektivität zwischen den verschiedenen Rasterpunkten, die dazu führt, daß der rechte untere Rasterpunkt im wesentlichen dieselbe Echohöhe aufweist wie der linke obere Rasterpunkt. Wie beschrieben unterscheidet sich die Reflektivität beider Punkte jedoch tatsächlich um den Faktor 2. Um Punkte gleicher Reflexionseigenschaften mit gleicher Amplitude, d.h. Echohöhe, abzubilden, wird der oben beschriebene Entfernungsausgleich verwendet. Die Funktion der Echohöhe von der Entfernung wird in nicht einfacher Weise von der Größe und der Form der Schwingerfläche bestimmt und kann beim Gruppenstrahler auch von der Ansteuerung abhängig sein. Die Abstandskorrektur der Echohöhe kann beispielsweise aus Schallfeldberechnungen ermittelt werden. Das Ergebnis einer SAFT-Rekonstruktion mit entfernungskorrigierten Echohöhen ist in Fig. 9 gezeigt. Die Reflektivitäten der Rasterpunkte entsprechen nun ihrem jeweiligen tatsächlichen Verhältnis.

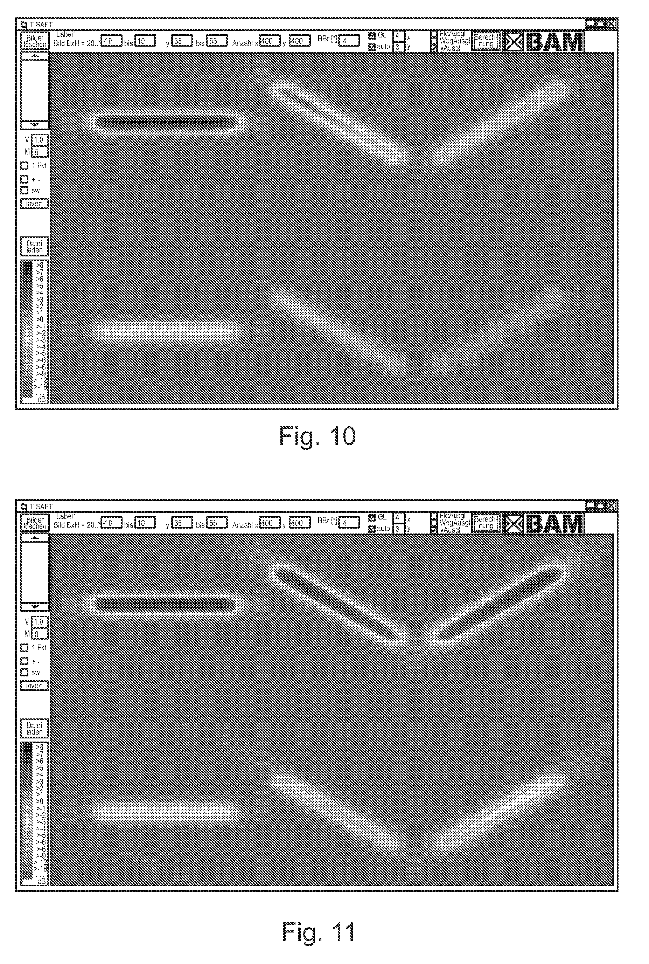

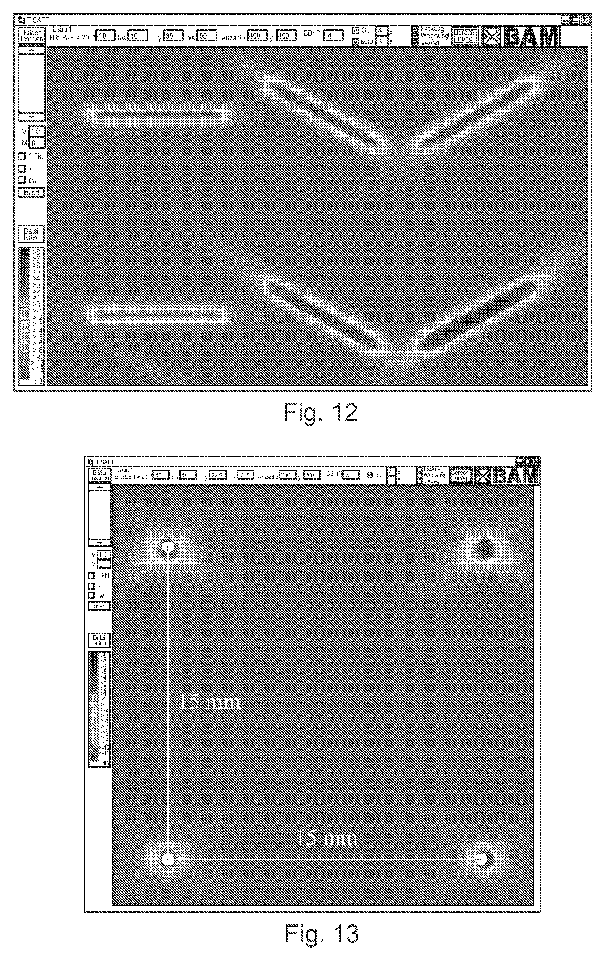

Anhand der Fign. 10 bis 12 wird im folgenden gezeigt, wie sich einzelne Korrekturen bzw. Kompensationen bei der SAFT-Rekonstruktion auswirken. Dabei zeigt Fig. 10 eine SAFT-Rekonstruktion dreier Rechteckflächen von jeweils 10×0,5 mm² unterschiedlicher Neigung in 40 (oben) bzw. 55 mm (unten) Tiefe ohne Kompensation der Einschallwinkelabhängigkeit der Echohöhen. Zum einen zeigt die Rekonstruktion eine deutliche Abhängigkeit der Echohöhe vom Neigungswinkel, wobei die waagerechte Fläche am besten abgebildet wird. Die beiden geneigten Flächen weisen schon deutlich kleinere Echohöhen auf, wobei die Echohöhen für die jeweiligen Neigungswinkel stark unterschiedlich ausgeprägt sind. Weiterhin ist das Echobild der in 55 mm Tiefe angeordneten Flächen (unten) deutlich schwächer ausgeprägt als das der in 45 mm Tiefe angeordneten Flächen (oben). Die in Fig. 11 gezeigte SAFT-Rekonstruktion der drei Rechteckflächen erfolgte mit Kompensation der Einschallwinkelabhängigkeit der Echohöhen. Gegenüber Fig. 10 zeigen sich die Echohöhen nunmehr relativ unabhängig vom Neigungswinkel der Rechteckflächen. Die kleineren Echohöhen für die in 55 mm Tiefe angeordneten Flächen bleiben jedoch erhalten. Die Fig. 12 zeigt nun eine SAFT-Rekonstruktion mit Kompensation sowohl der Einschallwinkelabhängigkeit als auch der Entfernungsabhängigkeit der Echohöhen. Durch die Kompensation sowohl der Winkelabhängigkeit als auch der Entfernungsabhängigkeit werden für alle Neigungswinkel und für beide Tiefen gleich starke Amplituden aufgenommen. Somit können gemäß dem vorliegenden Verfahren unterschiedlich zur Oberfläche geneigte Flächen mit etwa gleichbleibender Amplitude abgebildet werden, wenn die Abhängigkeit der Amplitude vom Einschallwinkel kompensiert wird. Der Einschallwinkelausgleich kann dabei durch Messungen und/oder Modellrechnungen ermittelt werden.

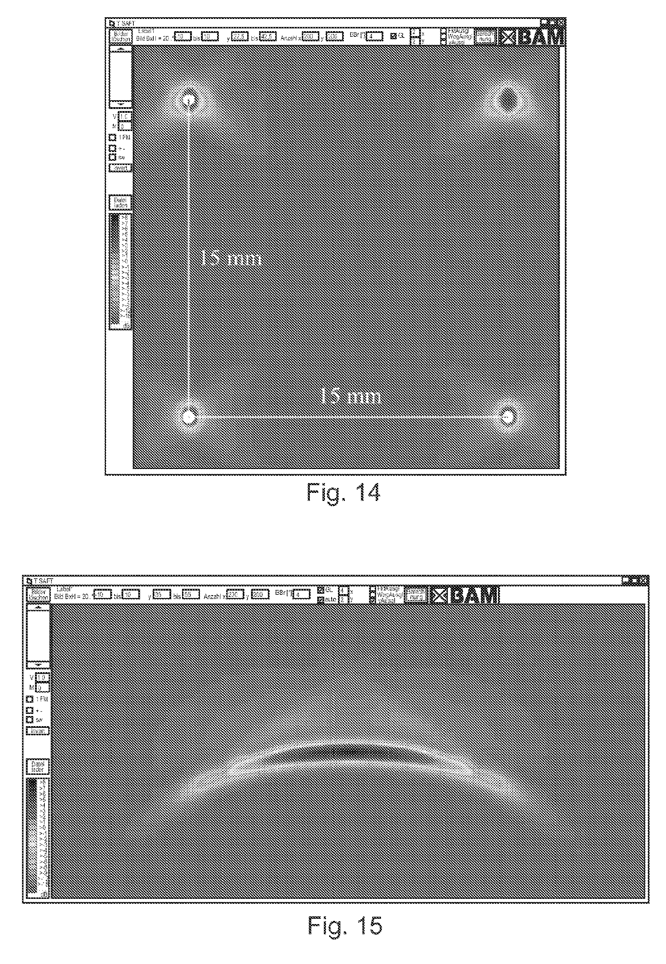

Anhand der Fign. 13 und 14 wird im folgenden die Kompensation des nichtlinearer Zusammenhangs zwischen der Laufzeit des Impulsschwerpunkts und der sich daraus ergebenden Entfernung einer Echoquelle gezeigt. Dabei zeigt Fig. 13 eine SAFT-Rekonstruktion eines 2×2 Punkterasters auf einem 15×15 mm² in 30 mm Tiefe ohne Kompensation der nichtlinearen Abbildung des Abstands. Erkennbar wird der horizontale Abstand zwischen den Punkt zwar richtig wiedergegeben, jedoch ist der vertikale Abstand aufgrund der nichtlinearen Abbildung zu klein. Eine SAFT-Rekonstruktion desselben 2×2 Punkterasters mit Kompensation der nichtlinearen Abbildung des Abstands ist in Fig. 14 gezeigt. Dabei wurden die Echohöhen mittels einer Entzerrungsfunktion korrigiert, wobei die Entzerrungsfunktion über eine numerische Modellierung des Schallfeldes und der Echolaufzeit bestimmt wurde.

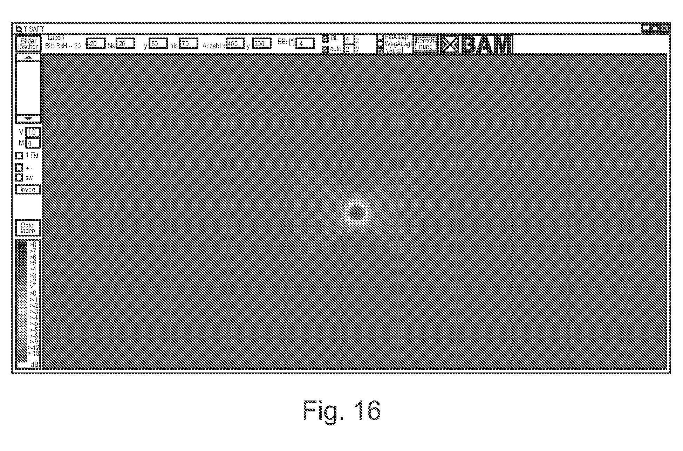

Weiterhin verlangt das SAFT-Prinzip, daß die Phasenlage bzw. die Laufzeit der Echos für jeden Bildpunkt bekannt ist, um in den gemessenen A-Bildern den richtigen Amplitudenwert zu finden. Fehler in der Laufzeitbestimmung führen zu Verschmierungen im rekonstruierten Bild. Die Fig. 15 zeigt beispielhaft eine SAFT-Rekonstruktion eines Punktreflektors in 60 mm Tiefe ohne Kompensation der Verschiebung des Schallaustrittspunktes. Aufgrund der Laufzeitfehler ist der Punkt länglich ausgeschmiert und gekrümmt. Hingegen zeigt Fig. 16 die SAFT-Rekonstruktion desselben Punktreflektors mit Kompensation der Verschiebung des Schallaustrittspunktes. Der Punkt ist deutlich und symmetrisch abgebildet.

Alle der oben beschriebenen Korrekturen bzw. Kompensationen können selbstverständlich einzeln oder in einer beliebigen Kombination miteinander verwendet werden, um die mittels des Gruppenstrahlerprüfkopfs erhaltenen Meßreihen so zu korrigieren, daß der beschriebene SAFT-Algorithmus mit gutem Ergebnis anwendbar ist.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Verfahren zur Erzeugung eines Ultraschallbildes eines Probenbereichs, umfassend
(a) Bereitstellen von mindestens zwei Ultraschall-Meßreihen, wobei die Meßreihen jeweils mittels eines Gruppenstrahlerprüfkopfs aufgenommen wurden und jeweils einem bestimmten Meßort auf einer Probe zugeordnet sind, wobei die jeweilige Meßreihe Meßdaten bezüglich mindestens zwei verschiedener Einschallwinkel umfaßt,
(b) Bereitstellen einer Echohöhencharakteristik des Gruppenstrahlerprüfkopfs für einen jeweiligen Einschallwinkel,
(c) Korrektur der gemessenen Echohöhen für jeden Einschallwinkel anhand der für diesen Einschallwinkel bereitgestellten Echohöhencharakteristik, und
(d) Ermitteln der Amplitude für einen jeweiligen Bildpunkt des Ultraschallbildes mittels des SAFT-Algorithmus unter Verwendung der korrigierten Echohöhen, wobei jeweils nur korrigierte Echohöhen für solche Einschallwinkel berücksichtigt werden, für die der Bildpunkt innerhalb eines für diesen Einschallwinkel vorbestimmten Auswertewinkelbereichs liegt.

2. Verfahren nach Anspruch 1, wobei in Schritt (c) eine Abhängigkeit der Echohöhe vom Einschallwinkel kompensiert wird, die im wesentlichen der Richtcharakteristik eines einzelnen Schwingerelements des Gruppenstrahlerprüfkopfs entspricht.

3. Verfahren nach einem der vorhergehenden Ansprüche, wobei in Schritt (c) eine Entfernungsabhängigkeit der Echohöhe kompensiert wird.

4. Verfahren nach einem der vorhergehenden Ansprüche, wobei die der Auswertewinkelbereich für alle Einschallwinkel als fester Winkelbereich, insbesondere ein Winkelbereich von ±1° bis ±10°, vorbestimmt ist.

5. Verfahren nach einem der Ansprüche 1 bis 3, wobei der Auswertewinkelbereich für einen jeweiligen Einschallwinkel durch die Schallbündeldivergenz für diesen Einschallwinkel gegeben ist.

6. Verfahren nach Anspruch 5, wobei die Schallbündeldivergenz durch einen vorbestimmten Echohöhenabfall bestimmt ist, wobei der vorbestimmte Echohöhenabfall insbesondere höchstens -6 dB, bevorzugt -3 dB, beträgt.

7. Verfahren nach einem der vorhergehenden Ansprüche, wobei das Schallfeld mittels eines vorbestimmten Zeitbelegungsprofils des Gruppenstrahlerprüfkopfs fokussiert wird.

8. Verfahren nach Anspruch 7, wobei anhand des vorbestimmten Zeitbelegungsprofils eine Laufzeitkorrekturgröße für einen jeweiligen Einschallwinkel ermittelt wird und die aufgrund der Fokussierung und/oder des Einschallwinkels auftretenden Verzögerungszeiten anhand der Laufzeitkorrekturgröße kompensiert werden.

9. Verfahren nach Anspruch 8, wobei die Laufzeitkorrekturgröße der zeitlichen Verzögerung des mittleren Schwingerelements des Gruppenstrahlerprüfkopfs gemäß der Zeitbelegung entspricht.

10. Verfahren nach einem der vorhergehenden Ansprüche, wobei weiterhin ein nichtlinearer Zusammenhang zwischen der Laufzeit des Impulsschwerpunkts und der sich daraus ergebenden Entfernung einer Echoquelle für jeden Einschallwinkel ermittelt wird und der nichtlineare Zusammenhang mittels einer Entzerrungsfunktion kompensiert wird.

11. Verfahren nach Anspruch 10, wobei die Entzerrungsfunktion über eine numerische Modellierung des Schallfeldes und der Echolaufzeit bestimmt wird.

12. Verfahren nach einem der vorhergehenden Ansprüche, wobei die zur Korrektur bzw. Kompensation erforderlichen Größen jeweils als Näherungsfunktion oder als Tabelle hinterlegt sind.

13. Verfahren nach einem der vorhergehenden Ansprüche, wobei die zur Korrektur bzw. Kompensation erforderlichen Größen jeweils aus einer Berechnung des Schallfeldes des Gruppenstrahlerprüfkopfs oder aus einer Vermessung des Schallfeldes des Gruppenstrahlerprüfkopfs bestimmt werden.

14. Vorrichtung zur Durchführung eines Verfahrens gemäß einem der vorhergehenden Ansprüche, umfassend
einen Gruppenstrahlerprüfkopf, und
eine Auswerteeinheit, die eingerichtet ist, ein Verfahren gemäß einem der vorhergehenden Ansprüche auszuführen.

15. Vorrichtung nach Anspruch 14, weiterhin umfassend eine Steuereinheit zur zeitlichen Ansteuerung der einzelnen Schwingerelemente des Gruppenstrahlerprüfkopfs.
